# FASCICULE DE BREVET EUROPEEN

(11) **EP 2 996 260 B1**
(45) Date de publication et mention de la délivrance du brevet: **25.01.2017**
(21) Numéro de dépôt: 15184183.0
(22) Date de dépôt: 08.09.2015
(51) Int. Cl.: H04B 7/185, H04L 29/08, H04W 4/00

(54) **PROCÉDÉ DE TRAITEMENT DANS UN SYSTÈME DE TÉLÉCOMMUNICATION, PROGRAMME D'ORDINATEUR ET SYSTÈME DE TÉLÉCOMMUNICATION ASSOCIÉS**
VERARBEITUNGSVERFAHREN IN EINEM TELEKOMMUNIKATIONSSYSTEM, ENTSPRECHENDES COMPUTERPROGRAMM UND ENTSPRECHENDES TELEKOMMUNIKATIONSSYSTEM
PROCESSING METHOD IN A TELECOMMUNICATION SYSTEM, ASSOCIATED COMPUTER PROGRAM AND TELECOMMUNICATION SYSTEM

(30) Priorité: 09.09.2014 FR 1402020
(43) Date de publication de la demande: 16.03.2016
(73) Titulaire: THALES, 92400 Courbevoie (FR)
(72) Inventeur: SOULIE, Antoine, 92622 GENNEVILLIERS CEDEX (FR); TURPIN, François, 49309 CHOLET CEDEX (FR); PIPON, François, 92622 GENNEVILLIERS CEDEX (FR)
(74) Mandataire: Lavoix

(56) Documents cités:
- US-B1- 8 606 266

## Description

La présente invention concerne un procédé de traitement dans un système de télécommunication comprenant un premier module de télécommunication sans fil adapté pour émettre des premiers ensembles de données selon un premier protocole de télécommunication sans fil sur au moins un canal de transmission sans fil.

Par exemple, les transpondeurs ATC (en anglais « Air Traffic Control ») embarqués à bord des avions sont utilisés pour communiquer les positions, altitude et/ou identité des avions. Cette communication peut être une réponse générée par l'ATC consécutivement à la réception d'une interrogation émise par un radar secondaire. Ce radar secondaire est associé à un radar primaire qui ne procède qu'à la détection de la position de l'avion en distance et azimut via la réception d'un écho.

Cette réponse peut également être générée suite à des interrogations venant d'autres avions situés dans l'espace aérien environnant. Ces interrogations sont émises par un système appelé TCAS (Traffic Collision Avoidance System) destiné à prévenir les collisions.

La seconde harmonique des réponses ATC à par exemple 1090 MHz véhiculant les messages de position, altitude et/ou identité des avions est centrée sur une fréquence Frₕ₂, par exemple égale à 2180 MHz et a un niveau de puissance de l'ordre de quelques watts.

La Demanderesse souhaite doter les avions de moyens de télécommunications mobiles, par exemple de type LTE, qui reçoivent les flux provenant des émetteur au sol en utilisant une bande de radiofréquence qui contient cette seconde harmonique.

Or la capacité en réception de ces moyens de télécommunications LTE embarqués dans un avion serait lourdement impactée lors de l'émission, par le transpondeur également embarqué dans l'avion, des trains d'impulsions aveuglant et invalidant, du fait notamment du mécanisme de gain adaptatif de ces moyens de télécommunications, la réception pendant une durée très longue comprenant le temps de resensibilisation du récepteur qui est nécessaire à ce dernier pour qu'il retrouve le gain lui permettant de traiter à nouveau correctement des signaux LTE reçus. Il en résulterait une perte de débit et un accroissement de la latence de communication LTE pouvant rendre non opérationnel les moyens de télécommunication LTE lorsque les émissions par le transpondeur sont fréquentes.

Il est notamment connu du document US 8 606 266 B1 un système de transmission de données comprenant un premier système de communication configuré pour transmettre et recevoir des données sur un premier réseau et un second système de communication configuré pour transmettre et recevoir des données sur un second réseau, le premier réseau et le second réseau ayant des couvertures réseau différentes. Le système de transmission comprend une unité adaptée pour sélectionner un routage des données échangées avec un dispositif utilisateur à partir du premier ou du second système de communication. Un des deux systèmes de communication est alors sélectionné, en fonction des conditions d'utilisation du dispositif utilisateur, afin d'obtenir la meilleure couverture réseau.

Toutefois, il convient d'améliorer la capacité du canal de télécommunications mobiles.

A cet effet, suivant un premier aspect, l'invention propose un procédé de traitement dans un système de télécommunication du type précité caractérisé en ce que le système de télécommunication comportant un deuxième module de télécommunication sans fil adapté pour recevoir et/ou émettre des deuxièmes ensembles de données sur le canal de communication sans fil selon un deuxième protocole de télécommunication sans fil distinct du premier protocole, ledit procédé comprend les étapes suivantes lorsqu'un premier ensemble de données est à émettre par le premier module de télécommunication sans fil :
- estimation de la durée nécessaire pour l'émission par le premier module de télécommunication sans fil dudit premier ensemble de données ;
- suite à ladite estimation, déclenchement d'une interruption, de durée égale à ladite durée estimée, de la réception et/ou de l'émission, par le deuxième module, de deuxièmes ensembles de données sur ledit canal de communication sans fil, pendant laquelle le premier ensemble de données est émis ;
- quand la durée estimée est écoulée à compter du déclenchement, déclenchement d'une reprise de la réception et/ou de l'émission, par le deuxième module, de deuxièmes ensembles de données sur ledit canal de communication sans fil.

La solution proposée permet de réduire les inconvénients de l'art antérieur, notamment de limiter l'impact de l'émission des premiers ensembles de données sur la réception ou l'émission des deuxièmes ensembles de données sur ledit canal.

Dans des modes de réalisation, le procédé de traitement dans un système de télécommunication suivant l'invention comporte en outre une ou plusieurs des caractéristiques suivantes :
- le système de télécommunication est embarqué à bord d'un bâtiment mobile, le premier module de télécommunication sans fil est un transpondeur adapté pour communiquer avec un radar distant, et le deuxième module de télécommunication sans fil est un récepteur de radiocommunications mobiles adapté pour communiquer avec un réseau distant de radiocommunications mobiles ;
- le deuxième protocole de télécommunication sans fil est un protocole LTE ;
- le premier ensemble de données à émettre est une réponse à un premier message reçu par le premier module et indiquant un code et ladite durée nécessaire pour l'émission dudit premier ensemble de données est estimée en fonction dudit code ;
- le deuxième module comporte une antenne de réception adaptée pour recevoir des deuxièmes ensembles de données sur le canal de communication sans fil et un circuit de traitement connecté à l'antenne et adapté pour traiter les deuxièmes ensembles de données reçus par l'antenne de réception, et selon lequel le déclenchement de l'interruption comprend une déconnection entre le circuit de traitement et l'antenne de réception et le déclenchement de la reprise de la réception de deuxièmes ensembles de données comprend une reconnection entre le circuit de traitement et l'antenne de réception ;
- le deuxième protocole de télécommunication sans fil est adapté pour que le deuxième module détecte qu'il n'a pas correctement reçu un deuxième ensemble de données et pour suite à ladite détection, reconstruire correctement ou faire ré-émettre ledit deuxième ensemble de données à destination du deuxième module.

Suivant un deuxième aspect, la présente invention propose un programme d'ordinateur à installer dans un module de pilotage dans un système de télécommunication comprenant en outre un premier module de télécommunication sans fil adapté pour émettre des premiers ensembles de données selon un premier protocole de télécommunication sans fil sur au moins un canal de transmission sans fil et un deuxième module de télécommunication sans fil adapté pour recevoir et/ou émettre des deuxièmes ensembles de données sur le canal de communication sans fil selon un deuxième protocole de télécommunication sans fil distinct du premier protocole, ledit procédé comprenant les étapes suivantes , ledit programme comportant des instructions pour mettre en oeuvre, lorsqu'un premier ensemble de données est à émettre par le premier module de télécommunication sans fil, les étapes d'un procédé selon le premier aspect de l'invention lors d'une exécution du programme par des moyens de traitement du module de pilotage.

Suivant un troisième aspect, la présente invention propose un système de télécommunication comprenant un bloc de pilotage, un premier module de télécommunication sans fil adapté pour émettre des premiers ensembles de données selon un premier protocole de télécommunication sans fil sur au moins un canal de transmission sans fil, ledit système étant caractérisé en ce qu'il comporte un deuxième module de télécommunication sans fil adapté pour recevoir et/ou émettre des deuxièmes ensembles de données sur le canal de communication sans fil selon un deuxième protocole de télécommunication sans fil distinct du premier protocole ;
ledit bloc de pilotage étant adapté pour, lorsqu'un premier ensemble de données est à émettre par le premier module de télécommunication sans fil, estimer la durée nécessaire pour l'émission par le premier module de télécommunication sans fil dudit premier ensemble de données, pour suite à ladite estimation, déclencher une interruption, de durée égale à ladite durée estimée, de la réception et/ou de l'émission, par le deuxième module, de deuxièmes ensembles de données sur ledit canal de communication sans fil, pendant laquelle le premier ensemble de données est émis et pour, quand la durée estimée est écoulée à compter du déclenchement, déclencher une reprise de la réception et/ou de l'émission, par le deuxième module, de deuxièmes ensembles de données sur ledit canal de communication sans fil.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'un système de télécommunication sans fil dans un mode de réalisation de l'invention ;
- la figure 2 représente un organigramme d'étapes d'un procédé dans un mode de réalisation de l'invention.

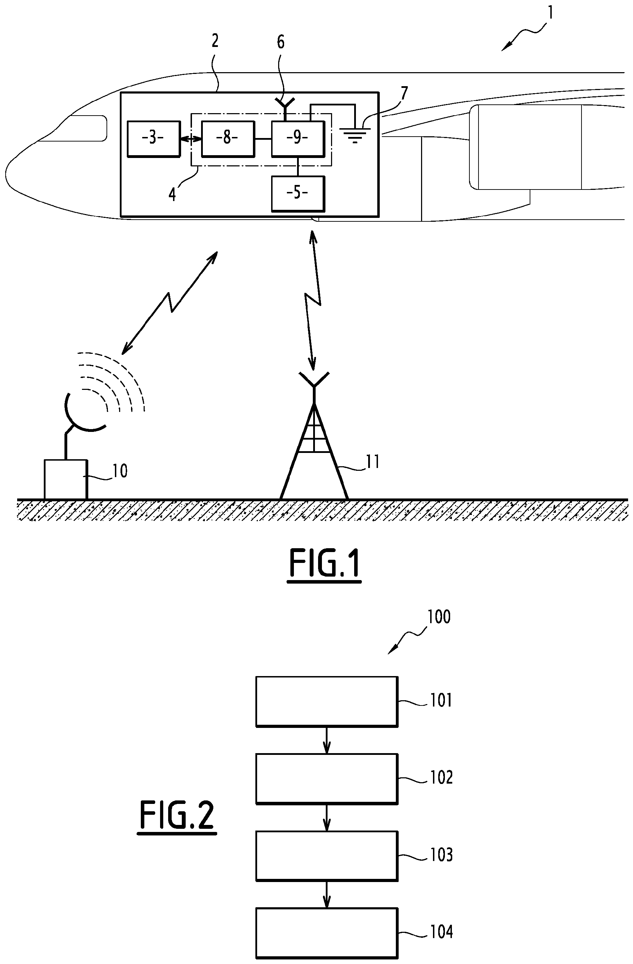

La figure 1 est une vue d'un système 2 de télécommunication sans fil dans un mode de réalisation de l'invention. Dans le cas présent, le système 2 de télécommunication sans fil est embarqué dans un avion 1.

Le système 2 de télécommunication sans fil comporte un transpondeur 3, un émetteur-récepteur LTE 5 et un bloc de pilotage 4.

Le transpondeur 3, de type ATC, est adapté pour recevoir des messages d'interrogation provenant d'un équipement distant (par exemple un radar secondaire au sol ou encore un transpondeur à bord d'un autre avion etc.).

Ces messages d'interrogation requièrent la fourniture, par le transpondeur 3, de caractéristiques de l'avion 1 telles que l'identité de l'avion et/ou son altitude courante et/ou sa position et/ou un code indiquant sa situation opérationnelle (panne radio, détournement etc.) et comportent au moins un code d'interrogation respectif indiquant quelle est la caractéristique qui est requise (ou quelles sont les caractéristiques requises).

Un tel message d'interrogation dans le cas considéré prend la forme d'un train d'impulsions à une fréquence Fi, par exemple Fi = 1030 MHz.

Le transpondeur 3 est adapté pour préparer, et émettre, un message de réponse au message d'interrogation.

Le contenu d'un message de réponse comporte la ou les caractéristiques de l'avion 1 requise(s) dans le message d'interrogation.

Un message de réponse prend la forme d'un train d'impulsions émis à une radiofréquence Fr, par exemple Fr = 1090 MHz, et suivant la ou les caractéristiques transmises, la longueur de ce train est soit de 25 microsecondes (µs), soit de 50 µs.

La seconde harmonique d'un message de réponse est centrée sur une fréquence Frₕ₂, par exemple égale à 2180 MHz, et s'étale sur environ 10 MHz. Le niveau de puissance de cette seconde harmonique est de quelques watts.

L'émetteur-récepteur LTE 5 est adapté pour émettre, respectivement recevoir, des données à destination, respectivement en provenance, de stations de base 11, de type eNode B, disposées au sol et à portée radio de l'émetteur/récepteur LTE 5.

Ces émissions et réceptions de données sont réalisées conformément au protocole LTE (en anglais « Long Term Evolution ») défini par le consortium 3GPP.

La bande de réception de l'émetteur-récepteur 5 est la bande [2170 MHz, 2185 MHz] dans le cas considéré.

L'émetteur-récepteur LTE 5 comprend un circuit de réception (non représenté, effectuant notamment un traitement de démodulation etc.) des signaux LTE reçus via une antenne 6 de réception de signaux LTE et il comprend un circuit d'émission des signaux LTE à émettre via une antenne d'émission (non représentés).

Le bloc de pilotage 4 est adapté pour, lorsqu'un message de réponse est à émettre par le transpondeur 3, réaliser les opérations suivantes :
- estimation de la durée nécessaire pour l'émission par le transpondeur 3 du message de réponse ;
- suite à ladite estimation, déclenchement d'une interruption, de durée égale à ladite durée estimée, de la réception, par l'émetteur-récepteur LTE 5, de données, pendant laquelle le message de réponse est émis par le transpondeur 3 ;
- quand la durée estimée est écoulée à compter du déclenchement, déclenchement d'une reprise de la réception, par l'émetteur-récepteur LTE 5, de données.

Dans le mode de réalisation particulier considéré, le bloc de pilotage 4 comprend un bloc de traitement 8 et un commutateur radiofréquence 9.

Le commutateur radiofréquence 9 est adapté pour, sur réception de commandes correspondantes du bloc de traitement 8:
- déconnecter l'antenne de réception 6 du circuit de réception de l'émetteur-récepteur LTE 5 et connecter à la place le circuit de réception à une source 7 de signal radiofréquence nul ; ou
- déconnecter la source 7 de signal radiofréquence nul du circuit de réception de l'émetteur-récepteur LTE 5 et connecter à la place le circuit de réception à l'antenne de réception 6.

Le bloc de traitement 8 est adapté, dans une réalisation particulière des opérations décrites ci-dessus de manière générale, pour mettre en oeuvre les étapes indiquées ci-dessous en référence à la figure 2 et incombant au bloc de traitement.

Dans un mode de réalisation, le bloc de traitement 8 comporte un microprocesseur et une mémoire stockant un programme d'instructions logicielles (non représentés). Le programme exécuté par le microprocesseur donne lieu à la mise en oeuvre des étapes de la figure 2 incombant au bloc de traitement 8.

Ainsi en référence à la figure 2, l'ensemble d'étapes 100 comporte les étapes 101 à 104.

Dans une étape 101, le bloc de traitement 8 détermine qu'un message de réponse va être transmis par le transpondeur 3 (par exemple, il surveille le transpondeur 3 ou il en est informé par le transpondeur 3 via un bus d'interruption reliant le transpondeur 3 et le bloc de traitement 8).

Dans une étape 102, suite à cette détermination qu'un message de réponse va être transmis par le transpondeur 3, le bloc de traitement 8 estime la durée nécessaire pour l'émission, par le transpondeur 3, du message de réponse. Dans le cas particulier considéré, cette durée pour l'émission est estimée à 25 µs ou de 50 µs en fonction du contenu du message de réponse (cette durée est, selon les cas, déduite par le bloc de traitement 8 en fonction du message de réponse à émettre ou en fonction d'une information, fournie par le transpondeur 3, relative à la durée ou au type de réponse).

Puis dans une étape 103, juste avant le début de l'émission du message de réponse par le transpondeur 3, le bloc de traitement 8 commande le commutateur radiofréquence 9 pour déconnecter l'antenne de réception 6 du circuit de réception de l'émetteur-récepteur LTE 5 et connecter à la place le circuit de réception de l'émetteur-récepteur LTE 5 à la source 7 de signal radiofréquence nul et le bloc de traitement 8 décompte alors ladite durée estimée (par exemple en armant un minuteur).

Pendant ce temps, le message de réponse est émis par le transpondeur 3.

Dès que ladite durée est entièrement décomptée, dans une étape 104, le bloc de traitement 8 commande le commutateur radiofréquence 9 pour déconnecter la source 7 de signal radiofréquence nul du circuit de réception de l'émetteur-récepteur LTE 5 et connecter à la place le circuit de réception à l'antenne de réception 6.

La solution proposée permet de réduire les inconvénients de l'art antérieur, notamment de limiter l'impact des impulsions des messages de réponse des transpondeurs sur les communications LTE à un niveau correspondant sensiblement à la durée réelle d'émission des messages de réponse.

Suite à l'étape 104, il va être détecté par l'émetteur/récepteur 5 et/ou l'eNode B 11, si des données émises par l'eNode B 11 n'ont pas été reçues par l'émetteur/récepteur LTE 5 pendant sa déconnexion de l'antenne de réception 6, grâce aux algorithmes de fiabilisation des transmissions du protocole LTE. Les erreurs de transmission dues aux données manquantes sont corrigées par l'émetteur-récepteur 5 à l'aide de redondances dans les données reçues (et sans avoir recours à des retransmissions) ou alors les données manquantes sont retransmises.

De tels algorithmes sont par exemple les algorithmes H-ARQ (en anglais « Hybrid Automatic Repeat reQuest ») et RLC (en anglais « Radio Link Control ») notamment. H-ARQ en particulier agit dans les 1 à 2 millisecondes, ce qui permet de limiter fortement les conséquences de la suspension de réception et de rendre cette dernière imperceptible pour les communications LTE de type data ou phonie.

Dans le mode de réalisation particulier décrit ci-dessus, la suspension de la réception par l'émetteur-récepteur LTE 5 est réalisée par une « mise à la masse » radiofréquence. Dans d'autres modes de réalisation, la suspension est effectuée par d'autres moyens, par exemple par la mise hors tension de l'émetteur-récepteur LTE 5.

Dans le mode de réalisation particulier décrit ci-dessus, une harmonique du signal principal émis par le transpondeur et la bande de réception de l'émetteur/récepteur LTE comportaient un même canal ; l'invention peut bien sûr être utilisée dans un cas où le signal principal lui-même émis par le transpondeur et la bande de réception du module LTE partagent un même canal. Dans un mode de réalisation où le signal principal, ou une de ses harmoniques émis par le transpondeur, et la bande d'émission du l'émetteur-récepteur LTE partagent un même canal radiofréquence, l'invention comprend la suspension de l'émission par l'émetteur-récepteur LTE, à la place ou en supplément, de la suspension de la réception par l'émetteur/récepteur LTE, pendant la durée déterminée.

L'invention a été décrite ci-dessus relativement à un transpondeur et à un émetteur-récepteur LTE. Bien sûr, dans un autre mode de réalisation de l'invention, le transpondeur et l'émetteur-récepteur LTE sont, l'un et/ou l'autre, remplacés par tout type d'autres équipements radiofréquences utilisant un canal radiofréquence commun.

Dans le mode de réalisation particulier décrit ci-dessus, la durée des messages pouvait prendre deux valeurs alternatives ; dans d'autres modes de réalisation, la durée des messages peut prendre un nombre quelconque de valeurs.

## Revendications

1. Procédé de traitement dans un système (2) de télécommunication comprenant un premier module (3) de télécommunication sans fil adapté pour émettre des premiers ensembles de données selon un premier protocole de télécommunication sans fil sur au moins un canal de transmission sans fil, le procédé étant tel que le système de télécommunication comportant un deuxième module (5) de télécommunication sans fil adapté pour recevoir et/ou émettre des deuxièmes ensembles de données sur le canal de communication sans fil selon un deuxième protocole de télécommunication sans fil distinct du premier protocole, ledit procédé comprend les étapes suivantes lorsqu'un premier ensemble de données est à émettre par le premier module de télécommunication sans fil :
- estimation de la durée nécessaire pour l'émission par le premier module (3) de télécommunication sans fil dudit premier ensemble de données ;
- suite à ladite estimation, déclenchement d'une interruption, de durée égale à ladite durée estimée, de la réception et/ou de l'émission, par le deuxième module (5), de deuxièmes ensembles de données sur ledit canal de communication sans fil, pendant laquelle le premier ensemble de données est émis ;
- quand la durée estimée est écoulée à compter du déclenchement, déclenchement d'une reprise de la réception et/ou de l'émission, par le deuxième module, de deuxièmes ensembles de données sur ledit canal de communication sans fil.

2. Procédé selon la revendication 1, selon lequel le système de télécommunication (2) est embarqué à bord d'un bâtiment mobile (1), le premier module (3) de télécommunication sans fil est un transpondeur adapté pour communiquer avec un radar distant, et le deuxième module (5) de télécommunication sans fil est un récepteur de radiocommunications mobiles adapté pour communiquer avec un réseau distant de radiocommunications mobiles.

3. Procédé selon la revendication 1 ou 2, selon lequel le deuxième protocole de télécommunication sans fil est un protocole LTE.

4. Procédé selon l'une des revendications précédentes, selon lequel le premier ensemble de données à émettre est une réponse à un premier message reçu par le premier module et indiquant un code et ladite durée nécessaire pour l'émission dudit premier ensemble de données est estimée en fonction dudit code.

5. Procédé selon l'une des revendications précédentes, selon lequel le deuxième module (5) comporte une antenne de réception adaptée pour recevoir des deuxièmes ensembles de données sur le canal de communication sans fil et un circuit de traitement connecté à l'antenne et adapté pour traiter les deuxièmes ensembles de données reçus par l'antenne de réception, et selon lequel le déclenchement de l'interruption comprend une déconnection entre le circuit de traitement et l'antenne de réception et le déclenchement de la reprise de la réception de deuxièmes ensembles de données comprend une reconnection entre le circuit de traitement et l'antenne de réception.

6. Procédé selon l'une des revendications précédentes, selon lequel le deuxième protocole de télécommunication sans fil est adapté pour que le deuxième module détecte qu'il n'a pas correctement reçu un deuxième ensemble de données et pour suite à ladite détection, reconstruire correctement ou faire ré-émettre ledit deuxième ensemble de données à destination du deuxième module.

7. Programme d'ordinateur à installer dans un module de pilotage (4) dans un système de télécommunication comprenant en outre un premier module de télécommunication sans fil adapté pour émettre des premiers ensembles de données selon un premier protocole de télécommunication sans fil sur au moins un canal de transmission sans fil et un deuxième module de télécommunication sans fil adapté pour recevoir et/ou émettre des deuxièmes ensembles de données sur le canal de communication sans fil selon un deuxième protocole de télécommunication sans fil distinct du premier protocole, ledit procédé comprenant les étapes suivantes , ledit programme comportant des instructions pour mettre en oeuvre, lorsqu'un premier ensemble de données est à émettre par le premier module de télécommunication sans fil, les étapes d'un procédé selon les revendications 1 à 6 lors d'une exécution du programme par des moyens de traitement du module de pilotage.

8. Système (2) de télécommunication comprenant un bloc de pilotage (4), un premier module (3) de télécommunication sans fil adapté pour émettre des premiers ensembles de données selon un premier protocole de télécommunication sans fil sur au moins un canal de transmission sans fil, ledit système étant tel qu'il comporte un deuxième module (5) de télécommunication sans fil adapté pour recevoir et/ou émettre des deuxièmes ensembles de données sur le canal de communication sans fil selon un deuxième protocole de télécommunication sans fil distinct du premier protocole ;
ledit bloc de pilotage (4) étant adapté pour, lorsqu'un premier ensemble de données est à émettre par le premier module de télécommunication sans fil, estimer la durée nécessaire pour l'émission par le premier module de télécommunication sans fil dudit premier ensemble de données, pour suite à ladite estimation, déclencher une interruption, de durée égale à ladite durée estimée, de la réception et/ou de l'émission, par le deuxième module, de deuxièmes ensembles de données sur ledit canal de communication sans fil, pendant laquelle le premier ensemble de données est émis et pour, quand la durée estimée est écoulée à compter du déclenchement, déclencher une reprise de la réception et/ou de l'émission, par le deuxième module, de deuxièmes ensembles de données sur ledit canal de communication sans fil.

9. Système (2) de télécommunication selon la revendication 8, dans lequel le système de télécommunication (2) est embarqué à bord d'un bâtiment mobile (1), le premier module (3) de télécommunication sans fil est un transpondeur adapté pour communiquer avec un radar distant, et le deuxième module (5) de télécommunication sans fil est un récepteur de radiocommunications mobiles adapté pour communiquer avec un réseau distant de radiocommunications mobiles.

10. Système (2) de télécommunication selon la revendication 8 ou 9, dans lequel le deuxième protocole de télécommunication sans fil est un protocole LTE.

11. Système (2) de télécommunication selon l'une des revendications 8 à 10, dans lequel le premier ensemble de données à émettre est une réponse à un premier message reçu par le premier module et indiquant un code, et le bloc de pilotage est adapté pour estimer ladite durée nécessaire pour l'émission dudit premier ensemble de données en fonction dudit code.

12. Système (2) de télécommunication selon l'une des revendications 8 à 11, dans lequel le deuxième module (5) comporte une antenne de réception adaptée pour recevoir des deuxièmes ensembles de données sur le canal de communication sans fil et un circuit de traitement connecté à l'antenne et adapté pour traiter les deuxièmes ensembles de données reçus par l'antenne de réception, et dans lequel le déclenchement de l'interruption comprend une déconnection entre le circuit de traitement et l'antenne de réception et le déclenchement de la reprise de la réception de deuxièmes ensembles de données comprend une reconnection entre le circuit de traitement et l'antenne de réception.

13. Système (2) de télécommunication selon l'une des revendications 8 à 12, dans lequel le deuxième protocole de télécommunication sans fil est adapté pour que le deuxième module détecte qu'il n'a pas correctement reçu un deuxième ensemble de données et pour suite à ladite détection, reconstruire correctement ou faire ré-émettre ledit deuxième ensemble de données à destination du deuxième module.

## Patentansprüche

1. Verarbeitungsverfahren in einem Telekommunikationssystem (2), ein erstes drahtloses Telekommunikationsmodul (3) umfassend, das dazu angepasst ist, erste Datensätze nach einem ersten drahtlosen Telekommunikationsprotokoll über mindestens einen drahtlosen Übertragungskanal zu übertragen,
wobei das Verfahren dergestalt ist, dass das Telekommunikationssystem ein zweites drahtloses Telekommunikationsmodul (5) umfasst, das dazu angepasst ist, zweite Datensätze über den drahtlosen Kommunikationskanal nach einem zweiten drahtlosen Telekommunikationsprotokoll zu empfangen und/oder zu übertragen, das sich vom ersten Protokoll unterscheidet, wobei das Verfahren die folgenden Schritte umfasst, wenn ein erster Datensatz durch das erste drahtlose Telekommunikationsmodul übertragen werden soll:
- Schätzen der Dauer, die das erste drahtlose Telekommunikationsmodul (3) zum Übertragen des ersten Datensatzes braucht;
- auf das Schätzen hin, Auslösen einer Unterbrechung, mit einer der geschätzten Dauer gleichen Dauer, des Empfangs und/oder der Übertragung durch das zweite Modul (5) von zweiten Datensätzen über den drahtlosen Kommunikationskanal, während der der erste Datensatz übertragen wird;
- wenn die geschätzte Dauer ab dem Auslösen verstrichen ist, Auslösen einer Wiederaufnahme des Empfangs und/oder der Übertragung durch das zweite Modul von zweiten Datensätzen über den drahtlosen Kommunikationskanal.

2. Verfahren nach Anspruch 1, wobei das Telekommunikationssystem (2) an Bord eines mobilen Bauwerks (1) befindlich ist, wobei das erste drahtlose Telekommunikationsmodul (3) ein Transponder ist, der dazu angepasst ist, mit einem entfernten Radar zu kommunizieren, und wobei das zweite drahtlose Telekommunikationsmodul (5) ein Mobilfunkkommunikationsempfänger ist, der dazu angepasst ist, mit einem entfernten Mobilfunkkommunikationsnetz zu kommunizieren.

3. Verfahren nach Anspruch 1 oder 2, wobei das zweite drahtlose Telekommunikationsprotokoll ein LTE-Protokoll ist.

4. Verfahren nach einem der vorhergehenden Ansprüche, wobei der erste zu übertragende Datensatz eine Antwort auf eine beim ersten Modul eingegangene Nachricht ist und einen Code angibt, und die zur Übertragung des ersten Datensatzes notwendige Dauer in Abhängigkeit von diesem Code geschätzt wird.

5. Verfahren nach einem der vorhergehenden Ansprüche, wobei das zweite Modul (5) eine Empfangsantenne, die dazu angepasst ist, zweite Datensätze über den drahtlosen Kommunikationskanal zu empfangen, und eine Verarbeitungsschaltung umfasst, die an die Antenne angeschlossen und dazu angepasst ist, die bei der Empfangsantenne eingegangenen zweiten Datensätze zu verarbeiten, und wobei das Auslösen der Unterbrechung eine Verbindungstrennung zwischen der Verarbeitungsschaltung und der Empfangsantenne umfasst, und das Auslösen der Wiederaufnahme des Empfangs von zweiten Datensätzen eine Wiederverbindung zwischen der Verarbeitungsschaltung und der Empfangsantenne umfasst.

6. Verfahren nach einem der vorhergehenden Ansprüche, wobei das zweite drahtlose Telekommunikationsprotokoll dazu angepasst ist, dass das zweite Modul erfasst, dass es einen zweiten Datensatz nicht richtig empfangen hat, und infolge dieser Erfassung, den zweiten Datensatz richtig zu rekonstruieren oder ihn erneut an die Destination des zweiten Moduls übertragen zu lassen.

7. Computerprogramm, das in einem Steuermodul (4) in einem Telekommunikationssystem zu installieren ist, darüber hinaus ein erstes drahtloses Telekommunikationsmodul, das dazu angepasst ist, erste Datensätze nach einem ersten drahtlosen Telekommunikationsprotokoll über mindestens einen drahtlosen Übertragungskanal zu übertragen, und ein zweites drahtloses Telekommunikationsmodul umfassend, das dazu angepasst ist, zweite Datensätze über den drahtlosen Kommunikationskanal nach einem zweiten drahtlosen Telekommunikationsprotokoll zu empfangen und/oder zu übertragen, das sich vom ersten Protokoll unterscheidet, wobei das Verfahren die folgenden Schritte umfasst, wobei das Programm Befehle umfasst, um, wenn ein erster Datensatz durch das erste drahtlose Telekommunikationsmodul übertragen werden soll, die Schritte eines Verfahrens nach den Ansprüchen 1 bis 6 bei einer Ausführung des Programms durch Verarbeitungseinrichtungen des Steuermoduls durchzuführen.

8. Telekommunikationssystem (2), einen Steuerblock (4) und ein erstes drahtloses Telekommunikationsmodul (3) umfassend, das dazu angepasst ist, erste Datensätze nach einem ersten drahtlosen Telekommunikationsprotokoll über mindestens einen drahtlosen Übertragungskanal zu übertragen,
wobei das System dergestalt ist, dass es ein zweites drahtloses Telekommunikationsmodul (5) umfasst, das dazu angepasst ist, zweite Datensätze über den drahtlosen Kommunikationskanal nach einem zweiten drahtlosen Telekommunikationsprotokoll zu empfangen und/oder zu übertragen, das sich vom ersten Protokoll unterscheidet; wobei der Steuerblock (4) dazu angepasst ist, wenn ein erster Datensatz durch das erste drahtlose Telekommunikationsmodul übertragen werden soll, die Dauer zu schätzen, die das erste drahtlose Telekommunikationsmodul zum Übertragen des ersten Datensatzes braucht, auf das Schätzen hin, eine Unterbrechung, mit einer der geschätzten Dauer gleichen Dauer, des Empfangs und/oder der Übertragung durch das zweite Modul von zweiten Datensätzen über den drahtlosen Kommunikationskanal auszulösen, während der der erste Datensatz übertragen wird, und, wenn die geschätzte Dauer ab dem Auslösen verstrichen ist, eine Wiederaufnahme des Empfangs und/oder der Übertragung durch das zweite Modul von zweiten Datensätzen über den drahtlosen Kommunikationskanal auszulösen.

9. Telekommunikationssystem (2) nach Anspruch 8, wobei das Telekommunikationssystem (2) an Bord eines mobilen Bauwerks (1) befindlich ist, wobei das erste drahtlose Telekommunikationsmodul (3) ein Transponder ist, der dazu angepasst ist, mit einem entfernten Radar zu kommunizieren, und wobei das zweite drahtlose Telekommunikationsmodul (5) ein Mobilfunkkommunikationsempfänger ist, der dazu angepasst ist, mit einem entfernten Mobilfunkkommunikationsnetz zu kommunizieren.

10. Telekommunikationssystem (2) nach Anspruch 8 oder 9, wobei das zweite drahtlose Telekommunikationsprotokoll ein LTE-Protokoll ist.

11. Telekommunikationssystem (2) nach einem der Ansprüche 8 bis 10, wobei der erste zu übertragende Datensatz eine Antwort auf eine beim ersten Modul eingegangene Nachricht ist und einen Code angibt, und der Steuerblock dazu angepasst ist, die zur Übertragung des ersten Datensatzes notwendige Dauer in Abhängigkeit von diesem Code zu schätzen.

12. Telekommunikationssystem (2) nach einem der Ansprüche 8 bis 11, wobei das zweite Modul (5) eine Empfangsantenne, die dazu angepasst ist, zweite Datensätze über den drahtlosen Kommunikationskanal zu empfangen, und eine Verarbeitungsschaltung umfasst, die an die Antenne angeschlossen und dazu angepasst ist, die bei der Empfangsantenne eingegangenen zweiten Datensätze zu verarbeiten, und wobei das Auslösen der Unterbrechung eine Verbindungstrennung zwischen der Verarbeitungsschaltung und der Empfangsantenne umfasst, und das Auslösen der Wiederaufnahme des Empfangs von zweiten Datensätzen eine Wiederverbindung zwischen der Verarbeitungsschaltung und der Empfangsantenne umfasst.

13. Telekommunikationssystem (2) nach einem der Ansprüche 8 bis 12, wobei das zweite drahtlose Telekommunikationsprotokoll dazu angepasst ist, dass das zweite Modul erfasst, dass es einen zweiten Datensatz nicht richtig empfangen hat, und infolge dieser Erfassung, den zweiten Datensatz richtig zu rekonstruieren oder ihn erneut an die Destination des zweiten Moduls übertragen zu lassen.

## Claims

1. A processing method in a telecommunication system (2) comprising a first wireless telecommunication module (3) designed to transmit first sets of data according to a first wireless telecommunication protocol on at least one wireless transmission channel,
said method being such that said telecommunication system comprising a second wireless telecommunication module (5) designed to receive and/or transmit second sets of data on the wireless communication channel according to a second wireless telecommunication protocol distinct from the first protocol, said method comprises the following steps when a first set of data is to be transmitted by said first wireless telecommunication module:
- estimating the duration needed for said first wireless telecommunication module (3) to transmit said first set of data;
- following said estimation, triggering an interruption, of equal duration to said estimated duration, of the reception and/or the transmission of second sets of data by said second module (5) on said wireless communication channel, during which said first set of data is transmitted;
- when the estimated duration from the start of triggering has elapsed, restarting of the reception and/or transmission of second sets of data by said second module on said wireless communication channel.

2. The method according to claim 1, wherein said telecommunication system (2) is embedded in a movable craft (1), said first wireless telecommunication module (3) is a transponder designed to communicate with a remote radar, and said second wireless telecommunication module (5) is a mobile radiocommunication receiver designed to communicate with a remote mobile radiocommunication network.

3. The method according to claim 1 or 2, wherein said second wireless telecommunication protocol is an LTE protocol.

4. The method according to any one of the preceding claims, wherein said first set of data to be transmitted is a response to a first message received by said first module and indicates a code and said duration needed to transmit said first set of data is estimated as a function of said code.

5. The method according to any one of the preceding claims, wherein said second module (5) comprises a reception antenna designed to receive second sets of data on the wireless communication channel and a processing circuit connected to the antenna and designed to process said second sets of data received by said reception antenna, and wherein triggering the interruption comprises a disconnection between said processing circuit and said reception antenna and triggering the restarting of the reception of second sets of data comprises a reconnection between said processing circuit and said reception antenna.

6. The method according to any one of the preceding claims, wherein said second wireless telecommunication protocol is designed so that said second module detects that it has not correctly received a second set of data and, following said detection, correctly reconstructs or retransmits said second set of data towards said second module.

7. A computer program to be installed in a control module (4) in a telecommunication system further comprising a first wireless telecommunication module designed to transmit first sets of data according to a first wireless telecommunication protocol on at least one wireless transmission channel and a second wireless telecommunication module designed to receive and/or transmit second sets of data on the wireless communication channel according to a second wireless telecommunication protocol distinct from said first protocol, said method comprising the following steps, said program comprising instructions for implementing, when a first set of data is to be transmitted by said first wireless telecommunication module, the steps of a method according to claims 1 to 6 when said program is executed by means of processing of said control module.

8. A telecommunication system (2) comprising a controlling block(4), a first wireless telecommunication module (3) designed to transmit first sets of data according to a first wireless telecommunication protocol on at least one wireless transmission channel, said system being such that it comprises a second wireless telecommunication module (5) designed to receive and/or transmit second sets of data on the wireless communication channel according to a second wireless telecommunication protocol distinct from said first protocol; said controlling block (4) being designed, when a first set of data is to be transmitted by said first wireless telecommunication module, to estimate the duration needed for said first wireless telecommunication module to transmit said first set of data in order to, following said estimation, trigger an interruption, of equal duration to said estimated duration, of the reception and/or transmission of second sets of data by said second module on said wireless communication channel, during which the first set of data is transmitted and in order to, when the estimated duration from the start of triggering has elapsed, trigger the restarting of the reception and/or transmission of second sets of data by said second module on said wireless communication channel.

9. The telecommunication system (2) according to claim 8, wherein said telecommunication system (2) is embedded in a movable craft (1), said first wireless telecommunication module (3) is a transponder designed to communicate with a remote radar, and said second wireless telecommunication module (5) is a mobile radiocommunication receiver designed to communicate with a remote mobile radiocommunication network.

10. The telecommunication system (2) according to claim 8 or 9, wherein said second wireless telecommunication protocol is an LTE protocol.

11. The telecommunication system (2) according to any one of claims 8 to 10, wherein said first set of data to be transmitted is a response to a first message received by said first module and indicates a code, and the controlling block is designed to estimate said duration needed to transmit said first set of data as a function of said code.

12. The telecommunication system (2) according to any one of claims 8 to 11, wherein said second module (5) comprises a reception antenna designed to receive second sets of data on the wireless communication channel and a processing circuit connected to said antenna and designed to process said second sets of data received by said reception antenna, and wherein triggering the interruption comprises a disconnection between the processing circuit and said reception antenna and triggering the restarting of the reception of second sets of data comprises a reconnection between said processing circuit and said reception antenna.

13. The telecommunication system (2) according to any one of claims 8 to 12, wherein said second wireless telecommunication protocol is designed so that said second module detects that it has not correctly received a second set of data and, following said detection, correctly reconstructs said second set of data or retransmits said second set of data to the second module.
